# EUROPEAN PATENT SPECIFICATION

(11) **EP 2 485 968 B1**
(45) Date of publication and mention of the grant of the patent: **18.05.2016**
(21) Application number: 10798154.0
(22) Date of filing: 01.10.2010
(51) Int. Cl.: B65F 5/00

(54) **METHOD FOR AND SYSTEM OF PNEUMATICALLY CONVEYING MATERIALS**
VERFAHREN UND SYSTEM ZUR PNEUMATISCHEN MATERIALBEFÖRDERUNG
PROCÉDÉ ET SYSTÈME DE TRANSPORT PNEUMATIQUE DE MATIÈRES

(30) Priority: 06.10.2009 FI 20096027
(43) Date of publication of application: 15.08.2012
(73) Proprietor: Maricap OY, 01450 Vantaa (FI)
(72) Inventor: SUNDHOLM, Göran, FI-04310 Tuusula (FI)
(74) Representative: Heinänen Oy Patent Agency
(86) International application number: PCT/FI2010/050758
(87) International publication number: WO 2011/042599

(56) References cited:
- WO-A1-2009/080881
- WO-A1-2009/080885
- WO-A1-2009/080888
- DE-A1- 2 939 856

## Description

### Background of the invention

The object of the invention is a method as defined in the preamble of claim 1.

The object of the invention is also a system as defined in the preamble of claim 15.

The invention relates generally to pneumatic materials moving systems, such as partial-vacuum conveying systems, more particularly to the collection and moving of wastes, such as to the moving of household wastes.

Systems wherein wastes are moved in piping by means of suction are known in the art. In these, wastes are moved long distances in the piping by sucking. The apparatuses are used for, among other things, the transfer of wastes in different institutions or for the transfer of household waste in urban areas. It is typical to these systems that a partial-vacuum apparatus is used to bring about a pressure difference, in which apparatus a partial vacuum is achieved in the transfer pipe with partial-vacuum generators, such as with vacuum pumps or with an ejector apparatus. A transfer pipe typically comprises at least one valve means, by opening and closing which the replacement air coming into the transfer pipe is regulated. In partial-vacuum transfer systems there are typically the following problems, among others: high energy consumption, high air flow in the piping, problems with noise, and dust and fine particle problems in the outlet pipe. In addition, especially with large distances, in which the lengths of a transfer pipe can be several thousands of meters, the pressure loss increases, in which case in order to ensure satisfactory operation of the transfer system very large pipe diameters and correspondingly efficient pump devices, i.e. fans are needed. This results in very expensive solutions in terms of costs, and also as the pipe size increases more space is required for the installations.

It has been possible to considerably improve prior-art solutions by producing a system, in which at least a part of the transfer piping can be connected as a part of a circuit, in which conveying air is circulated, at least during the conveyance of the material, with a pump device the suction side of which is connected to at least one separating device and further to a transfer pipe on its return side so that at least a part of the conveying air on the pressure side of the pump is led into the circuit on the output side of the transfer pipe. This type of solution is presented in e.g. patent publication Fl 20085141 and in the corresponding patent publication WO2009/0808 and in WO2009/080888, which corresponds to the preambles of appended claims 1 and 15.

The aim of the present invention is to further develop the aforementioned systems and to achieve a totally novel solution in connection with the transfer systems of a material, by means of which solution the drawbacks of prior-art solutions will be avoided. Another aim of the invention is to achieve a solution applicable to partial-vacuum transfer systems that is suited to large systems. Yet another aim is to achieve a solution, by means of which the volume of outlet air of the system and, at the same time, emissions of dust and fine particles and possible odor nuisances can be decreased.

### Brief description of the invention

The method according to the invention is mainly characterized by what is disclosed in the characterization part of claim 1.

The method according to the invention is also characterized by what is stated in claims 2-14.

The system according to the invention is mainly characterized by what is disclosed in the characterization part of claim 15.

The system according to the invention is also characterized by what is stated in claims 16-28.

The solution according to the invention has a number of significant advantages. By arranging at least a part of the piping in a circuit, in which the conveying air can be circulated, an effective conveying effect is achieved in the different parts of the transfer piping and also a fast transfer from the input pipe to the transfer pipe is achieved. By arranging the piping of the system to comprise a circuit where at least a part of the conveying air circulates, the volume of outlet air can be decreased. At the same time the energy consumption of the system decreases. By maintaining a partial vacuum and, at the same time, blowing an effective circulation of conveying air can be achieved in the circuit and conveying of material in the transfer pipe. With the solution according to the invention a conventional so-called "Single Line" system that comprises one transfer pipe can be efficiently combined with a solution in which at least a part of the transfer piping forms a circuit in which conveying air can be circulated, i.e. a Ring Line system. At the same time total energy consumption can be made more efficient when at least a part of the conveying distance is performed in the transfer piping in which conveying air is circulated. This is a significant advantage, particularly in large waste-conveying systems that cover e.g. a whole city district or city. The invention enables the use of smaller pipe diameters of the transfer piping in pipe sections that are connected at their second end to the transfer piping that forms a circuit but in which sections conveying air is not circulated, i.e. to a so-called "Single Line" section. When using a system according to the embodiment of the invention, in which a system that utilizes the circulation of conveying air, i.e. a Ring Line system, and a transfer pipe section, in which conveying air is not circulated, i.e. a Single Line system, connected to it are combined, an advantageous pressure loss situation is achieved.

When the Single Line and the Ring Line systems are connected, the Single Line pipe section is selected to be smaller and the diameter of the Ring Line pipe section, i.e. the pipe section in which conveying air can be circulated in the circuit, to be larger, if necessary. In this case some of the air volume is sufficient to transfer wastes in the Single Line part of the piping to the Ring Line pipe section, i.e. to the pipe section that forms a circuit, in which conveying air can be circulated. The total power requirement decreases, in which case a considerable saving is achieved. Typically the saving is in the range of 30-50 %. With the solution according to the invention, it is possible to essentially reduce the volume of outlet air and at the same time to reduce possible dust problems and fine particle problems in the outlet pipe. Furthermore, the odor nuisances of transfer pipings typical to conventional pneumatic conveying systems of wastes can be reduced. According to the invention at least a part of the transfer piping can be connected as a part of a circuit in which the suction effect to be achieved with the pump devices can be adjusted and/or controlled and/or opened or closed with closing means/adjustment means, such as valve means, which are arranged in connection with the transfer piping. In this case suction can be efficiently circulated in the system even if the transfer piping of the system would not be a complete ring. At the same time efficient conveying of material can be achieved in the piping. With the method and apparatus according to the invention it is possible to efficiently adjust the relationship of the air to be blown into the transfer piping and the air to be blown out of the system. With the solution according to the invention, the noise problem caused by prior art can also be essentially reduced. Moisture accumulated in the piping decreases and the piping can be dried by circulating air in the piping. When the air to be sucked in decreases, the use of energy also decreases. By opening and closing the input points of the system according to the invention, efficient transferring of material into the transfer pipe and conveying in the transfer pipe is achieved, while at the same time it is possible to keep the noise impact caused by the operation of the system small. By arranging the transfer pipe of the materials moving system to be composed of operating areas, i.e. subcircuits, the conveying of material in the transfer piping and the emptying of input points into the transfer pipe can be effectively arranged. By arranging the conveying air circulation in the opposite direction an effective removal of clogging can be achieved. The change of the conveying air circulation into the other direction can be arranged easily in ring piping. Also the total energy consumption decreases because, among other things, additional energy for drying the piping, heating the piping, etc., is not needed.

### Brief description of the figures

In the following, the invention will be described in more detail by the aid of an example with reference to the attached drawing, wherein
Fig. 1 presents one system according to the embodiment of the invention as a diagram, in a first operating phase,
Fig. 2 presents one system according to the embodiment of the invention as a diagram, in a second operating phase,
Fig. 3 presents the situation of Fig. 2 clarified with some of the components of diagram 2 removed,
Fig. 3a presents a detail of the system, and
Fig. 4 presents a simplified diagram of a system according to the embodiment of the invention.

### Detailed description of the invention

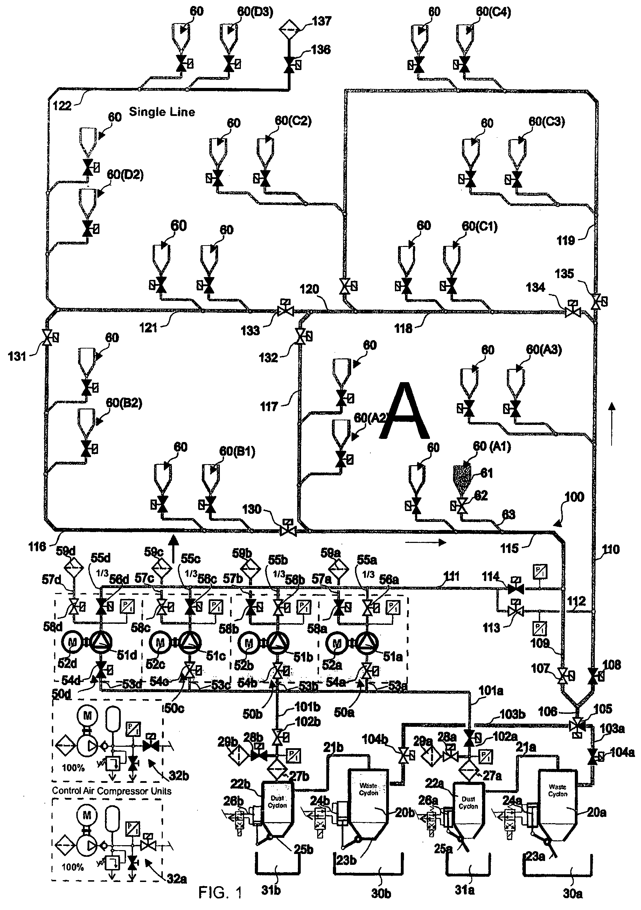

Figs. 1-3 present as a simplified diagram a pneumatic materials moving system, more particularly a wastes transfer system, according to one embodiment of the invention. The figure presents a material transfer pipe 100, which is formed from a number of sections 106, 109, 110, 115, 116, 117, 118, 119, 120, 121, 122, along the side of which transfer pipe at least one, typically many, input points 60 are arranged. The input point 60 is a feed-in station of material, more particularly of waste material, intended to be conveyed, from which station the material, more particularly waste material, such as household waste, intended to be conveyed is fed into the transfer system. The system can comprise a number of feed-in stations 60, from which the material intended to be conveyed is fed into the transfer piping. In the figures the input point components are described with reference numbers in connection with only one input point 60. The input point 60 typically comprises a feed-in container 61, which can be connected to an input pipe 63. A transfer pipe typically comprises at least one valve means 62, by opening and closing which material can be transferred from the input point into the transfer pipe. The input pipe 63 is connected to the transfer pipe 100, which can thus be formed from a number of pipe sections 106, 109, 110, 115, 116, 117, 118, 119, 120, 121, 122. The input pipe 63 can comprise a number of input points 60, which are connected to a transfer pipe via one input pipe.

The replacement air needed in emptying the feed-in container 61 comes, in the embodiment of Fig. 1, via the feed-in container 61. According to a second embodiment, a separate replacement air branch coupling, which can be provided with a filtering means, can additionally be in connection with an input point.

The material fed into the transfer pipe 100 from the input point 60 is conveyed along the transfer piping to one or more separating devices 20a, 20b in which the material being conveyed is separated, e.g. due to the dropping of speed and centrifugal force, from the conveying air. The separated material is removed, e.g. according to need, from the separating device 20a, 20b, to a material container 30a, 30b, such as a waste container, or to further treatment. The material container can comprise a waste compactor (not shown), with which the material is compacted by compressing into smaller size and from which compactor the material is further conveyed to the waste container.

In the embodiment of Fig. 1, two separating devices 20a, 20b are presented, into which material can be transferred in a controlled manner. In this case when e.g. the first separating device 20a is filled the material to be transferred can be guided to a second separating device 20b. A corresponding arrangement can be applied e.g. when sorting the material to be transferred into different allotments. In the embodiment of the figures both separating devices 20a, 20b are provided with material removing means 23a, 24a; 23b, 24b. The material removing means comprise e.g. a closing means 23a, 23b of the output aperture and the drive means 24a, 24b of it. From the separating device 20a, 20b the pathway 21 a, 21 b of the medium leads to the particle separator 22a, 22b and further a conveying air duct 101 a, 101b to the means 50a, 50b, 50c, 50d for forming a partial vacuum in the transfer pipe.

In the embodiment of Fig. 1 the means for forming a partial vacuum comprise a number of pump units 50a, 50b, 50c, 50d. By means of them the partial vacuum needed in conveying material is produced in the transfer piping and/or in a part of it. Each of the pump units 50a, 50b, 50c, 50d comprises a pump device 51 a, 51 b, 51 c, 51 d, which is used with a drive device 52a, 52b, 52c, 52d. The suction side of the pump devices can be connected via the separating means 20a, 20b to the transfer piping 100. The blowing side of the pump devices 51a, 51b, 51c, 51d, for its part, can be connected in the embodiment of the figure to blow into the transfer pipe 100 via the line 111 and/or into the outlet line 57a, 57b, 57c, 57d. The diagram according to the figures presents four pump units 50a, 50b, 50c and 50d. The operation of the invention is described in the following, however, by means of only three pump units 50a, 50b, 50c, in which case the fourth pump unit 50d is e.g. in reserve.

The blowing side of the pump device 51 a of the first pump unit 50a has two lines, a line 55a leading to the transfer piping 100 and an outlet line 57b, which lines are provided with the valve means 56a and 57b. In the embodiment of the figure, the outlet line is provided with a filtering means 59a. The blowing produced by the pump device of the pump unit can be controlled by opening and closing the valves 56a and 57a. The suction side of the pump device 51a of the pump unit is connected with a suction line 53a to the line 101 a or 101 b going to the separating device 20a, 20b. The suction line comprises a valve means 54a. The second pump unit 50b, third pump unit 50c and fourth pump unit 50d have corresponding components and functions to the first pump unit. In addition, each pump unit is provided with a pressure sensor P/l, which in the embodiment of the figure is connected to the blowing side of the pump device.

The system thus comprises means for leading the outlet air of the pump devices into at least a part of the transfer piping. The transfer piping 100 in the embodiments of the figures can be divided into operating areas or subcircuits A-D with the valve means 107, 108, 130, 131, 132, 133, 134, 135, i.e. with area valves.

At least a part of the transfer piping 100 can be connected as a part of a circuit, in which conveying air can be circulated with a pump device, the suction side of which is connected to at least one separating device and onward to a transfer pipe on its return side, such that at least a part of the conveying air on the pressure side of the pump device is led into the circuit on the output side of the transfer pipe. In the embodiment according to the figure at least a part of the transfer piping can be formed as a ring or as a number of rings, in which the conveying air circulation can be changed by means of valve means.

In the embodiment according to the figures, it is assumed for the sake of clarity that each of the pump units 50a, 50b, 50c delivers into the transfer piping approx. 1/3 of the suction, partial vacuum or air flow produced by the apparatus and correspondingly approx. 1/3 of the air flow on the blowing side or of the pressure on the blowing side, if they are connected to a transfer pipe.

According to a second embodiment it is possible that the output power of the pump devices can be adjusted, in which case the suction powers/blowing powers achieved with the different pump devices can be varied according to need.

Fig. 1 presents a situation in which the input point 60 (A1) of subcircuit A is being emptied, the feed-in container 61 of which input point is darkened in Fig. 1. The suction sides (suction lines 53a, 53b, 53c) of each of the three pump devices 50a, 50b, 50c are connected to the line 101b and onwards via the particle separator 22b and the line 21 b and also the separating device 20b to the return end 103b of the transfer pipe. In this case the waste material is thus transferred from the input point 60 along the transfer pipe to the second separating device 20b. The valve means 105, which in the embodiment of the figures is a three-way valve, conducts the suction effect produced by the pump devices onwards to the transfer pipe section 109, when the valve means 107 is open. The transfer pipe section 109 connects to a second transfer pipe section 115, to which the input pipe 63 of the input point 60 to be emptied connects. When traveling against the flow direction of the waste material, the input point in question is closest to the separating means 20b, i.e. to the delivery end of the waste material. In the situation of Fig. 1 the area valves 130, 131, 132, 133, 134 and 135 are open and the valves of the input pipe of an input point other than that to be emptied are closed (black in the figures).

The transfer piping of the figure also comprises one individual pipe branch, i.e. the pipe section 122 in the figure, the free end of which comprises a replacement air valve 136 and a filtering means 137, from which free end the pipe branch is not connected to any other transfer pipe section. The replacement air valve 136 in question is also closed in the situation of Fig. 1.

In the situation of Fig. 1 the blowing sides of the pump devices 51a, 51b of two pump units 50a and 50b are connected to blow into the transfer piping via the lines 55a, 55b and the pipes 111 and 112 into the output side of the transfer pipe in the pipe section 110. Since the suction side of the pump devices of three pump units are connected to the transfer piping and the blowing sides of only two pump units to the transfer piping on the output side, the piping contains a partial vacuum at least on the return side of the piping.

At least a part of the transfer piping 100 is used as a reservoir, into which the pressure side and/or the suction side of at least one pump device 51 a, 51 b, 51 c, 51 d can be connected such that the suction effect achieved in the transfer piping is greater than the blowing effect.

The return side of blowing is fitted to be with respect to the input pipe of the input point to be emptied on the side in the transfer pipe that is away from the separating device. In this case e.g. approx. 2/3 of the air flow in the transfer pipe at the point of the input pipe 63 comes from the blowing of the pump devices 51 a, 51 b and e.g. approx. 1/3 via the replacement air branch coupling and/or the freed-in container 61, when the losses and possible leaks of the system are not taken into account.

In the case according to Fig. 1, when in the input point 60 (A1) the valve means 62 of the point is opened, the material batch intended to be transferred is transferred into the transfer pipe from the input pipe 63 into the section 115 of the transfer pipe for transferring onwards along the route 115-109-106-103b to the separating device 20b. Possible replacement air into the transfer pipe comes e.g. via the feed-in container 61 of the input point 60(A1) and/or from the replacement air branch coupling into the transfer pipe when the valve 62 is opened. The blowing side of one pump unit is thus in the operating mode in question in the embodiment of the figure arranged to blow into the outlet duct 57c, in which typically at least one filter device 59c is arranged, as in the embodiment of the figure, to filter the outlet air. A valve means 58c is arranged in the outlet duct 57c. In the figure a connection, such as via the air ducts 111, 112, is arranged from the blowing side of two pump devices 51 a, 51 b to the transfer pipe 110 on the output side of it. A valve means 114 is arranged in the air duct 111 on the blowing side, which valve means when closed prevents a connection of the blowing side to the pipe section 109 of the transfer pipe, which in the embodiment and the operating mode of the figure is the return side. The apparatus according to the embodiment of the figures comprises means 111, 112, 113, 114, by means of which the blowing side of the pump devices can be connected to blow into the circuit of the transfer piping at least in two directions that are opposite to each other.

The blowing in the transfer piping is led in the piping such that at the point at which the input pipe 63 of the input point to be emptied is connected to the transfer pipe, a flow according to the transfer direction of the material prevails at least during the emptying.

In the following an operating mode of the system according to the invention is described, in which operating mode one of the two feed-in containers 60(A2) of an input point of the area A is emptied into the transfer pipe. Now the section of transfer pipe in question is the pipe section 117 that is in the center of the more extensive circuit. The valve 130 of the transfer pipe is now closed with respect to the situation of Fig. 1, by means of which valve the suction effect of all three pump devices can be directed at exactly the correct pipe section, on the one hand, and at the same time it is ensured that the flow is not able to occur past the pipe section 117 in question, e.g. via the pipe section 116. The contents of the feed-in container of the input point 60 (A2) transfer via the input pipe to the pipe section 117 of the transfer pipe and onwards along the route 115-106-103b to the separating means 20b.

Correspondingly when it is desired to empty the feed-in container of the input point 60(A3), the input pipe of which is connected to the transfer pipe to the section 110, which in the previous figures was the pipe section to which the blowing side of the pump devices was connected. The blowing air is now controlled by means of the valves 113 and 114 to circulate in the piping in the opposite direction. The pipe section 111 of the blowing side of the pump devices is now directly connected to the pipe section 115, which is now the output side. In addition, the valve 107 of the transfer pipe is closed, in which case there is no direct connection from the pipe section 109 to the pipe section 103b leading to the separating means. Correspondingly the valve 108 is opened, in which case there is a connection to the separating means via the pipe section 103b from the pipe section 110, which is now the return side. The valve 130 that was closed in the previous operating mode is opened. The contents of the feed-in container of the input point 60 (A3) transfer to the pipe section 110 of the transfer pipe and from there onwards via the pipe section 106-103b to the separating means 20b.

In the following the operating mode in which the feed-in container of the input point 60(C1) is emptied is described. Compared to the previous operating mode, the valves of the input point 60(C1) now to be emptied have been opened, and the valves of the input point 60(A3) that were open in connection with the previous emptying are closed. In addition, the valve 135 of the transfer pipe, which is between the pipe sections 119 and 110, is closed. In this case the suction effect of all three pump devices can be directed at exactly the correct pipe section 118, on the one hand, and at the same time it is ensured that the flow is not able to occur past the pipe section 118 in question, e.g. via the pipe section 119. The contents of the feed-in container of the input point 60(C1) transfer to the pipe section 118 of the transfer pipe and from there onwards via the pipe section 110-106-103b to the separating means 20b.

Correspondingly when the next feed-in container 60(C2) of an input point of the area C is emptied. Compared to the previous operating mode, the valves of the input point 60(C2) to be emptied have been opened, and the valves of the input point that were open in connection with the emptying of the previous figure are closed. In addition, the valve 135 of the transfer pipe, which is between the pipe sections 119 and 110, is further closed. Also the valve 133 of the transfer pipe is closed. In this case the suction effect of all three pump devices can be directed at exactly the correct pipe section 119, on the one hand, and at the same time it is ensured that the flow is not able to occur past the pipe section 119 in question. The contents of the feed-in container transfer to the pipe section 119 of the transfer pipe and from there onwards via the pipe section 118-110-106-103b to the separating means 20b.

Next the feed-in container of the next input point of the area C is emptied. Compared to the previous operating mode, the discharge valve of the input point 60(C3) to be emptied has been opened, and the discharge valve of the input point 60(C2) that was open in connection with the emptying of the previous figure is closed. In addition, the valve 135 of the transfer pipe, which is between the pipe sections 119 and 110, is now opened. On the other hand, the valve 134 between the pipe sections 110 and 118 is closed. In this case the suction effect of all three pump devices can be directed at exactly the correct pipe section 119, on the one hand, and at the same time it is ensured that the flow is not able to occur past the pipe section 119 in question, via the pipe section 118. The contents of the feed-in container of the input point 60(C3) transfer to the pipe section 119 of the transfer pipe and from there onwards via the pipe section 110-106-103b to the separating means 20b.

Next the feed-in container 60 of the next input point 60(C4) of the area C is emptied the same route as in the situation described earlier. Compared to the previous operating mode, the discharge valve of the input point 60(C4) to be emptied has been opened, and the valve of the input point 60(C3) that was open in connection with the emptying of the previous figure is closed. In other respects the valves are in the position of the preceding operating mode. The contents of the feed-in container of the input point 60(C4) transfer to the pipe section 119 of the transfer pipe and from there onwards via the pipe sections 110-106-103b to the separating means 20b.

When it is desired to next empty the feed-in container of the input point 60(B1) of the area B, the discharge valve of which has been opened, and the discharge valve of the input point 60(C4) that was open in connection with the emptying of the previous figure is closed. The suction sides of the pump devices are connected to act on the pipe section 109 by opening the valve 107 in it and by closing the valve 108 of the pipe section 110. Correspondingly, the blowing sides of the pump devices 51a, 51b are connected to the pipe section 110 by opening the valve, 113 of the duct 112 and by closing the valve 114 between the pipe section 109 and the air duct 111. Also the valve 132 in the pipe section 117 is closed. The contents of the feed-in container of the input point 60(B1) of the area B transfer to the pipe section 116 of the transfer pipe 100 and from there onwards via the pipe sections 115-109-106-103b to the separating means 20b.

Next the feed-in container of the next input point 60(B2) of the area B is emptied the same route as in the situation described earlier. Compared to the previous operating mode, the valve of the input point 60(B2) to be emptied has been opened, and the discharge valve of the input point that was open in connection with the emptying of the previous input point 60(B1) is closed. In other respects the valves are in the positions of the preceding operating mode. The contents of the feed-in container of the input point 60(B2) of the area B transfer to the pipe section 116 of the transfer pipe 100 and from there onwards via the pipe sections 115-109-106-103b to the separating means 20b.

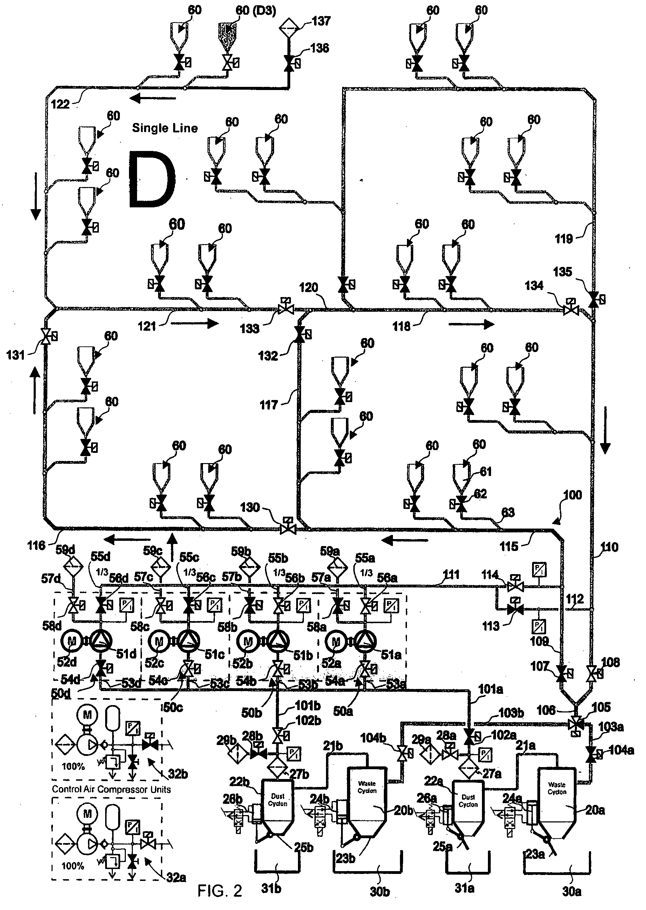

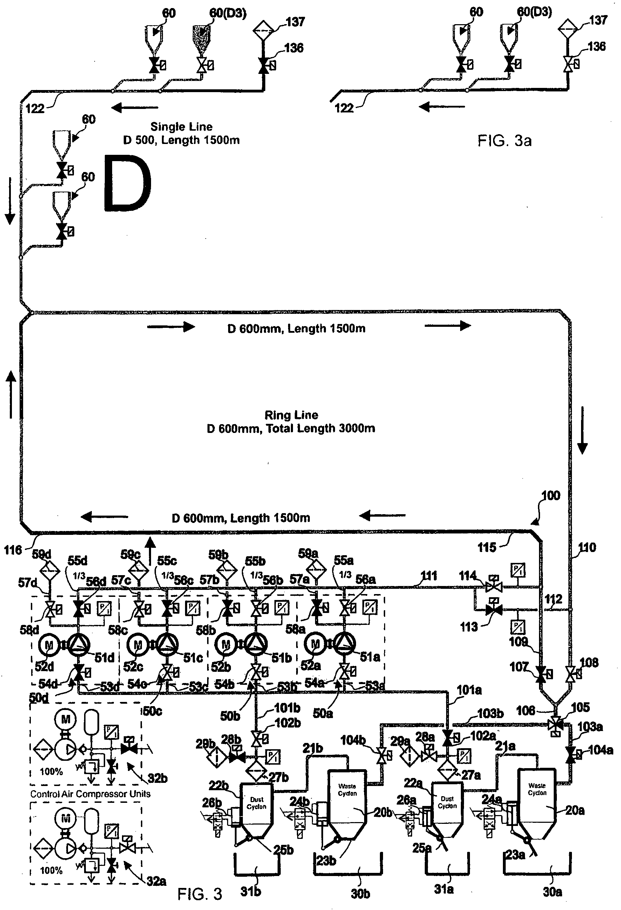

Next the feed-in container of the input point 60(D3) of the area D is emptied into the pipe section 122. This situation is presented in Fig. 2 and further clarified in Fig. 3. Compared to the previous operating mode, the valves of the input point 60(D3) now to be emptied have been opened, and the valves of the input point 60 that were open in connection with the previous emptying are closed. In addition, the valve 135 of the transfer pipe, which is between the pipe sections 119 and 110, is closed. In this case the suction effect of all three pump devices can be directed at exactly the correct pipe section 118-120-121, on the one hand, and at the same time it is ensured that the flow is not able to occur past the pipe section in question, e.g. via the pipe section 119. The contents of the feed-in container of the input point 60(D3) transfer to the pipe section 122 of the transfer pipe and when the replacement air valve 136 (Fig. 3a) of the pipe section 122 is opened, when the valves of the input points 60 are closed, in which case the pressure difference transfers the waste material in the transfer pipe onwards from there via the pipe section 121-120-118-110-106-103b to the separating means 20b. The valve 130 in the section 116 and the valve 131 in the section 116 are open. Likewise the valve 133 in the section 118 is open. The pressure difference and/or the conveying air current achieved transfers the material from the feed-in container into the transfer pipe into the section 122 and onwards to the pipe section 121 and onwards along the aforementioned route to the separating means.

From the operating modes presented above it can be seen that the operation of the system is controlled such that for the emptying of the input points of the desired operating area at least one valve that is in the transfer direction of the material with respect to the operational area of the transfer pipe and that is on the output side, i.e. on the suction side, of the conveying air is open, in which case the suction is able to act in the transfer pipe of the operational area.

Typically the input points 60 of the operating area, or at least a part of them, are emptied such that the contact of input point that is closest to the delivery end in the travel direction of the transfer pipe, i.e. closest to the separating device 20b in the embodiment according to the figure, to the transfer pipe is opened first, in which case the material is able to transfer from the first input point into the transfer pipe. After this the connection of the next input point to the transfer pipe is opened, and the connection of the first input point, which is already emptied, is closed.

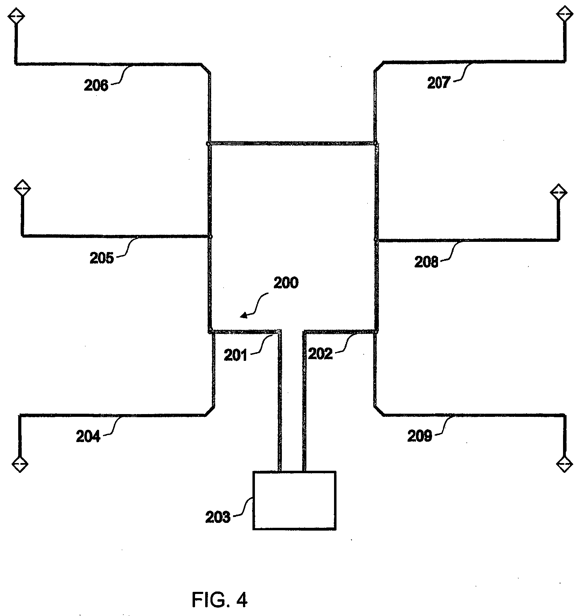

Fig. 4 further presents a simplified diagram of a system according to the invention. In the center of the figure is a part of the circuit 200 in which conveying air can be circulated. The pipe sections 204, 205, 206, 207, 208, 209, in which conveying air is not circulated, are joined at their first ends to the pipe sections 201, 202 of the circuit. The second end of these typically comprises a replacement air valve, which is opened and closed according to need. The input points of the pipe sections 204, 205, 206, 207, 208, 209 are not presented in the figure, but instead the purpose of the figure is to illustrate a preferred method to utilize the solution according to the invention in large materials moving systems, such as in pneumatic systems for moving wastes. Each of the pipe sections 204, 205, 206, 207, 208, 209, which can be connected at their second end to the circuit 201, 202 can comprise one or more input points, as does the pipe section 122 presented in Figs. 1-3. The pump devices and separating means, and other such drive devices, of the system are shown in the diagram with the marking 203. As described earlier, the circulation of the conveying air in the circuit can be changed, in which case both of the pipe sections 201, 202 can function, depending on the situation, as an output pipe or as a return pipe.

The invention thus relates to a method in a pneumatic materials moving system, such as a waste transfer system, which transfer system comprises at least one input point 60 of material, more particularly of waste material, a material transfer pipe 100, which pipe can be connected to the input point 60, and at least one separating device 20a, 20b, in which the material to be conveyed is separated from the conveying air, and means for achieving a pressure difference and/or a conveying air current in the transfer pipe 100 at least during conveyance of the material, which means for achieving a pressure difference and/or a conveying air current comprise at least one pump unit, which comprises at least one pump device 51a, 51b, 51c, 51 d. In the method the transfer piping 100 comprises at least one transfer pipe section, in which conveying air is circulated, and at least one transfer pipe section 122; 204, 205, 206, 207, 208, 209, in which conveying air is not circulated, which section can be connected to that part of the transfer piping in which conveying air is circulated, at least during the emptying of the input point of the transfer pipe section and during the conveyance of material in the transfer pipe section 122; 204, 205, 206, 207, 208, 209 such that the conveying route of the material in the transfer piping is formed partly from the transfer pipe section 122; 204, 205, 206, 207, 208, 209 in which conveying air is not circulated, and partly from the transfer pipe section in which conveying air is circulated, and that the transfer pipe section 122; 204, 205, 206, 207, 208, 209 in which conveying air is not circulated is formed to be smaller in its diameter than the transfer pipe section in which conveying air is circulated.

According to one preferred embodiment in the method the pressure side and/or the suction side of at least one pump device 51 a, 51 b, 51 c, 51 d can be connected to the transfer piping 100, at least a part of which forms a circuit in which conveying air can be circulated, and that the air volume to be blown out of the transfer piping 100 corresponds essentially to the air volume coming into the transfer piping.

According to one preferred embodiment in the method conveying air can be circulated in a circuit formed by at least a part of the transfer piping with a pump device 50a, 50b, 50c, the suction side of which is connected to at least one separating device 20a, 20b and onward to a transfer pipe 100, on its return side, such that, if necessary, at least a part of the conveying air on the pressure side of the pump devices is led into the circuit on the output side of the transfer pipe.

According to one preferred embodiment in the method the transfer system comprises at least one transfer pipe section in which conveying air is circulated, and at least one transfer pipe section 122; 204, 205, 206, 207, 208, 209 in which conveying air is not circulated, which section can be connected to that part of the system in which conveying air is circulated, of which the transfer pipe section 122; 204, 205, 206, 207, 208, 209 in which conveying air is not circulated is formed to be smaller in diameter than the transfer pipe section of the system in which conveying air is circulated.

According to one preferred embodiment in the method air is removed from the circuit via at least one air outlet 57a, 57b, 57c, 57d, which preferably comprises a closing means/adjustment means, such as a valve means 58a, 58b, 58c, 58d.

According to one preferred embodiment also the circulation of air in a circuit, which comprises at least a part of the transfer piping 100, is adjusted and/or controlled and/or opened or closed with closing means/adjustment means, such as with valve means 107, 108, 113, 114, 130, 131, 132, 133, 134, 135, which are arranged in the circuit.

According to one preferred embodiment in the method a partial vacuum is achieved in the circuit with at least one pump device 51 a, 51 b, 51 c, 51 d, such as a partial-vacuum generator and/or a fan, the suction side of which is connected to a separating means 20a, 20b or to a transfer pipe 100, 109, 110 leading to it via an air duct 101a, 101b.

According to one preferred embodiment in the method pressure is achieved in the circuit with at least one pump device 51 a, 51 b, 51 c, 51 d, such as a partial-vacuum generator and/or a fan, the blowing side of which is connected to blow into the circuit.

According to one preferred embodiment in the method the air circulation is adjusted by connecting it, if necessary, into the opposite direction in at least a part of the circuit, which part is formed from at least a part of a transfer pipe 100.

According to one preferred embodiment in the method material is fed in from the input points 60 of material, which are the input points of waste, such as waste receptacles or refuse chutes.

According to one preferred embodiment in the method replacement air is brought into the circuit via at least one replacement air duct, which preferably comprises a valve means, in which case the replacement air brought into the circuit essentially corresponds to the air volume blown out of the circuit.

According to one preferred embodiment in the method at least one valve means 62 is between an input point 60 and a transfer pipe 100, by opening and closing which valve means the input of material and/or replacement air into the transfer pipe is adjusted.

According to the invention in the method the transfer pipe section 122; 204, 205, 206, 207, 208, 209 in which conveying air is not circulated is formed to be large in its length, in which case the length of the transfer pipe section is over 100 meters, or can be even over 1000 meters, even a number of kilometers.

According to one preferred embodiment in the method pipes are used as the transfer piping 100, the diameter of which is typically in the range 100-1000 mm, preferably 300 - 800 mm, most preferably 450 - 600 mm.

According to one preferred embodiment the sum of the flow rate of the air flow acting in the transfer pipe section 122; 204, 205, 206, 207, 208, 209 of at least one transfer pipe section 122; 204, 205, 206, 207, 208, 209 in which conveying air is not circulated, which section can be connected to that part of the transfer piping in which conveying air is circulated, at least during the emptying of the input point of the transfer pipe section and during the conveyance of material, and the flow rate of the blowing air flow of the circuit corresponds to the flow rate of the air flow of the suction side of the circuit at least at the point of connection of the pipe section 122 to the circuit, or in the proximity of it.

The invention also relates to an apparatus in a pneumatic materials moving system, such as in a waste transfer system, which comprises at least one input point 60 of material, more particularly of waste material, a material transfer pipe 100, which can be connected to an input point 60, and a separating device 20a, 20b, in which the material to be conveyed is separated from the conveying air, and means 50a, 50b, 50c, 50d for achieving a pressure difference and/or a conveying air current. The transfer piping 100 comprises at least one transfer pipe section, which can be formed into a circuit in which conveying air can be circulated, and that there is at least one transfer pipe section 122 in which conveying air is not circulated, which section can be connected to that part of the transfer piping in which conveying air can be circulated, at least during the emptying of the input point 60 of the transfer pipe section and during the conveyance of material in the transfer pipe section 122, such that the conveying route of the material in the transfer piping 100 is fitted to be formed partly from a transfer pipe section 122 in which conveying air is not circulated, and partly from a transfer pipe section in which conveying air is circulated, and that the transfer pipe section 122 in which conveying air is not circulated is formed to be smaller in its diameter than the transfer pipe section in which conveying air is circulated.

According to one preferred embodiment the apparatus further comprises means for circulating the conveying air in a circuit formed by at least a part of the transfer piping with a pump device 50a, 50b, 50c, the suction side of which can be connected to at least one separating device 20a, 20b and onward to a transfer pipe 100, on its return side, such that, if necessary, at least a part of the conveying air on the pressure side of the pump devices can be led into the circuit on the output side of the transfer pipe.

According to one preferred embodiment the air volume to be blown out of the transfer piping is fitted to essentially correspond to the air volume coming into the transfer piping.

According to one preferred embodiment the apparatus comprises closing means/adjustment means, such as valve means 107, 108, 113, 114, 130, 131, 132, 133, 134, 135, arranged in a circuit, which comprises at least a part of the transfer piping, with which means also the circulation of conveying air can be adjusted and/or controlled and/or opened or closed.

According to one preferred embodiment at least one transfer pipe section 122; 204, 205, 206, 207, 208, 209 in which conveying air is not circulated can be connected to that part of the transfer piping in which conveying air is circulated, such that at least during the emptying of the input point of the transfer pipe section and during the conveyance of material, the sum of the flow rate of the air flow acting in the transfer pipe section 122; 204, 205, 206, 207, 208, 209 and the flow rate of the blowing air flow of the circuit is fitted to correspond to the flow rate of the air flow of the suction side of the circuit at least at the point of connection of the pipe section 122 to the circuit, or in the proximity of it.

Typically the apparatus comprises at least one transfer pipe section in which conveying air is circulated, and at least one transfer pipe section 122 in which conveying air is not circulated, which section can be connected to that part of the transfer piping in which conveying air is circulated, of which the transfer pipe section 122 in which conveying air is not circulated is formed to be smaller in diameter than the transfer pipe section in which conveying air is circulated.

According to one preferred embodiment the apparatus comprises at least one outlet 57a, 57b, 57c, 57d, which preferably comprises a closing means/adjustment means 58a, 58b, 58c, 58d, such as a valve means, for removing at least a part of the air from the circuit.

According to one preferred embodiment the means for achieving a pressure difference comprise at least one pump device 50a, 50b, 50c, 50d, such as a partial-vacuum generator and/or a fan, the suction side of which is connected to a separating means 20a, 20b or to a transfer pipe 100, 109, 110 leading to it via an air duct 101a, 101b.

According to one preferred embodiment the means for achieving a pressure difference comprise at least one pump device 51a, 51b, 51c, 51d, such as a partial-vacuum generator and/or a fan, and means 55a, 56a; 55b, 56b; 55c, 56c; 55d, 56d; 111, 112, 113, 114 for connecting the blowing side of at least one pump device, such as a partial-vacuum generator and/or a fan, to blow into the circuit.

According to one preferred embodiment the apparatus comprises means 107, 108, 111, 112, 113, 114 for connecting the conveying air circulation into the opposite direction in at least a part of the circuit, which part is formed from at least a part of a transfer pipe 100.

According to one preferred embodiment the input points 60 of material are the input points of waste, such as waste receptacles or refuse chutes.

According to one preferred embodiment at least one valve means 62 is between an input point 60 and a transfer pipe 100, by opening and closing which valve means the input of material and/or replacement air into the transfer pipe is adjusted.

According to one preferred embodiment the apparatus comprises at least one air inlet 66, which preferably comprises a valve means 64, for bringing air into the circuit from outside it.

According to the invention the transfer pipe section 122; 204, 205, 206, 207, 208, 209 in which conveying air is not circulated is large in its length, in which case the length of the transfer pipe section is over 100 meters, or can be even over over 1000 meters, even a number of kilometers.

According to one preferred embodiment pipes are used as the transfer piping (100), the diameter (d) of which is typically in the range 100-1000 mm, preferably 300 - 800 mm, most preferably 450 - 600 mm.

Typically the suction produced in the transfer pipe by the pump devices, on the side of the separating device in the figure, is preferably larger than the blowing, in which case transfer occurs in a partial vacuum. When the suction is greater than the blowing, a partial vacuum is achieved in the piping, in which case waste can be sucked to inside the piping from the feed-in container of an input point.

The discharge valve of an input point is opened and closed such that material batches of a suitable size are transferred from the input point into the transfer pipe. Material is fed in from an input point, such as from a waste bin or refuse chute, and after it has filled a discharge valve is opened, either automatically or manually.

The system can also comprise a number of separating devices 20a, 20b, into which conveyance of material is guided e.g. according to the type of material or on the basis of the capacity of the system.

When using a system according to the embodiment of the invention, in which a system that utilizes the circulation of conveying air, i.e. a Ring Line system, and a transfer pipe section 122, in which conveying air is not circulated, i.e. a Single Line system, connected to it are combined, an advantageous pressure loss situation is achieved and up to 30-50% energy can be saved.

The pipe dimensioning of the transfer pipe section in which conveying air is not circulated, i.e. of the Single Line pipe section, is generally such that the loss of the pressure of the piping is calculated for the whole distance and the size of the piping is dimensioned according to the pressure loss. For long distances the diameter of the piping considerably increases, because the extractors/fans have a limited suction capability (partial-vacuum production capacity). As the diameter of the piping increases, the air volume needed increases considerably so that the waste would move in the piping. Typically the pipe size is e.g. 600mm on a conveying distance of over 2km and in this case the output power of the fans needed would be approx. 1000kw.

If the Single Line and the Ring Line systems are connected, as in the cases of Figs. 2 and 3, the Single Line pipe section 122 can be selected to be smaller, e.g. 450-500 mm, and the diameter of the Ring Line pipe section, i.e. the pipe section in which the conveying air can be circulated in the circuit, to be larger, in this case e.g. 600m, in which case some of the air volume is sufficient to transfer wastes in the Single Line part of the piping to the Ring Line pipe section, i.e. to the pipe section that forms a circuit in which conveying air can be circulated. In this case typically the speed of the conveying air is also greater. The total power requirement is in this case approx. 500kw, i.e. the saving is approx. 50%. Typically the saving is in the range of 30 - 50 %. Typically, therefore, the sum of the flow rate of the air flow acting in the transfer pipe section 122; 204, 205, 206, 207, 208, 209 of at least one transfer pipe section 122; 204, 205, 206, 207, 208, 209 in which conveying air is not circulated, which section can be connected to that part of the transfer piping in which conveying air is circulated, at least during the emptying of the input point of the transfer pipe section and during the conveyance of material, and the flow rate of the blowing air flow of the circuit corresponds to the flow rate of the air flow of the suction side of the circuit at least at the point of connection of the pipe section 122 to the circuit, or in the proximity of it.

It is obvious to the person skilled in the art that the invention is not limited to the embodiments presented above, but that it can be varied within the scope of the claims presented below. The characteristic features possibly presented in the description in conjunction with other characteristic features can also, if necessary, be used separately to each other.

## Claims

1. Method for conveying waste material in a pneumatic waste transfer system, which transfer system comprises at least two input points (60) of waste material, which can be connected to an input pipe (63), a material transfer pipe (100), which is connected to each input pipe (63), and at least one separating device (20a, 20b), the material is conveyed along the transfer pipe to the at least one separating device (20a, 20b) in which the material is separated from the conveying air, and means for achieving a pressure difference and/or a conveying air current in the transfer pipe (100) at least during conveyance of the material, which means for achieving a pressure difference and/or a conveying air current comprise at least one pump unit, which comprises at least one pump device (51 a, 51 b, 51 c, 51 d), the transfer piping (100) comprising at least one transfer pipe section in which conveying air is circulated, **characterized in that** in the method at least one transfer pipe section (122; 204, 205, 206, 207, 208, 209) in which conveying air is not circulated, which section is connected to that part of the transfer piping in which conveying air is circulated, at least during the emptying of an input point of the transfer pipe section and during conveyance of the material in the transfer pipe section (122; 204, 205, 206, 207, 208, 209), such that the conveying route of the material in the transfer piping is formed partly from a transfer pipe section (122; 204, 205, 206, 207, 208, 209) in which conveying air is not circulated, and partly from a transfer pipe section in which conveying air is circulated, and **in that** the transfer pipe section (122; 204, 205, 206, 207, 208, 209) in which conveying air is not circulated is formed to be smaller in its diameter than the transfer pipe section in which conveying air is circulated and that a length of the transfer pipe section (122, 204, 205, 206, 207, 208, 209) in which conveying air is not circulated is formed to be over 100 meters.

2. Method according to claim 1, **characterized in that** in the method the pressure side and/or the suction side of at least one pump device (51 a, 51 b, 51 c, 51 d) is connected to the transfer piping (100), at least a part of which forms a circuit in which conveying air can be circulated, and **in that** the air volume to be blown out of the transfer piping (100) corresponds essentially to the air volume coming into the transfer piping.

3. Method according to claim 1 or 2, **characterized in that** in the method conveying air is circulated in a circuit formed by at least a part of the transfer piping with a pump device (50a, 50b, 50c), the suction side of which is connected to at least one separating device (20a, 20b) and onward to a transfer pipe (100), on its return side, such that, if necessary, at least a part of the conveying air on the pressure side of the pump devices is led into the circuit on the output side of the transfer pipe.

4. Method according to any of claims 1 - 3, **characterized in that** in the method air is removed from the circuit via at least one air outlet (57a, 57b, 57c, 57d), which preferably comprises a closing means/adjustment means, such as a valve means (58a, 58b, 58c, 58d).

5. Method according to any of claims 1 - 4, **characterized in that** also the circulation of air in a circuit, which comprises at least a part of the transfer piping (100), is adjusted and/or controlled and/or opened or closed with closing means/adjustment means, such as with valve means (107, 108, 113, 114, 130, 131, 132, 133, 134, 135), which are arranged in a circuit.

6. Method according to any of claims 1 - 5, **characterized in that** in the method a partial vacuum is achieved in the circuit with at least one pump device (51 a, 51 b, 51 c, 51 d), such as a partial-vacuum generator and/or a fan, the suction side of which is connected to a separating means (20a, 20b) or to a transfer pipe (100, 109, 110) leading to it via an air duct (101 a, 101 b).

7. Method according to any of claims 1 - 6, **characterized in that** in the method pressure is achieved in the circuit with at least one pump device (51 a, 51 b, 51 c, 51 d), such as a partial-vacuum generator and/or a fan, the blowing side of which is connected to blow into the circuit.

8. Method according to any of claims 1 - 7, **characterized in that** in the method the air circulation is adjusted by connecting it, if necessary, into the opposite direction in at least a part of the circuit, which part is formed from at least a part of a transfer pipe (100).

9. Method according to any of claims 1 - 8, **characterized in that** in the method material is fed in from the input points (60) of material, which are the input points of waste, such as waste receptacles or refuse chutes.

10. Method according to any of claims 1 - 9, **characterized in that** in the method replacement air is brought into the circuit via at least one replacement air duct, which preferably comprises a valve means, in which case the replacement air brought into the circuit essentially corresponds to the air volume blown out of the circuit.

11. Method according to any of claims 1 - 10, **characterized in that** at least one valve means (62) is between an input point (60) of material and a transfer pipe (100), by opening and closing which valve means the input of material and/or replacement air into the transfer pipe is adjusted.

12. Method according to any of claims 1 - 11, **characterized in that** the transfer pipe section (122, 204, 205, 206, 207, 208, 209) in which conveying air is not circulated is formed to be large in its length, in which case the length of the transfer pipe section is over 1000 meters, even a number of kilometers.

13. Method according to any of claims 1 - 12, **characterized in that** pipes are used as the transfer piping (100), the diameter of which is typically in the range 100-1000 mm, preferably 300 - 800 mm, most preferably 450 - 600 mm.

14. Method according to any of claims 1 - 13, **characterized in that** the sum of the flow rate of the air flow acting in the transfer pipe section (122; 204, 205, 206, 207, 208, 209) of at least one transfer pipe section (122; 204, 205, 206, 207, 208, 209) in which conveying air is not circulated, which section is connected to that part of the transfer piping in which conveying air is circulated, at least during the emptying of the input point of the transfer pipe section and during the conveyance of material, and the flow rate of the blowing air flow of the circuit corresponds to the flow rate of the air flow of the suction side of the circuit at least at the point of connection of the pipe section (122) to the circuit, or in the proximity of it.

15. Pneumatic waste transfer system, which comprises at least two input points (60) of material, more particularly of waste material, which can be connected to an input pipe (63), a material transfer pipe (100), which is connected to each input pipe (63), and a separating device (20a, 20b), in which the material to be conveyed is separated from the conveying air, and means (50a, 50b, 50c, 50d) for achieving a pressure difference and/or a conveying air current, the transfer piping (100) comprising at least one transfer pipe section, which can be formed into a circuit in which conveying air can be circulated, **characterized in that** there is at least one transfer pipe section (122) in which conveying air is not circulated, which section can be connected to that part of the transfer piping in which conveying air can be circulated, at least during the emptying of an input point (60) of the transfer pipe section and during conveyance of the material in the transfer pipe section (122), such that the conveying route of the material in the transfer piping (100) is fitted to be formed partly from a transfer pipe section (122) in which conveying air is not circulated, and partly from a transfer pipe section in which conveying air is circulated, and **in that** the transfer pipe section (122) in which conveying air is not circulated is formed to be smaller in its diameter than the transfer pipe section in which conveying air is circulated and that a length of the transfer pipe section (122, 204, 205, 206, 207, 208, 209) in which conveying air is not circulated is over 100 meters.

16. System according to claim 15, **characterized in that** the apparatus further comprises means for circulating conveying air in a circuit formed by at least a part of the transfer piping with at least one pump device (50a, 50b, 50c), the suction side of which can be connected to at least one separating device (20a, 20b) and onward to a transfer pipe (100), on its return side, such that, if necessary, at least a part of the conveying air on the pressure side of the pump devices can be led to the output side of the transfer pipe into the circuit.

17. System according to claim 15 or 16, **characterized in that** the air volume to be blown out of the transfer piping is fitted to essentially correspond to the air volume coming into the transfer piping.

18. System according to any of claims 15 - 17, **characterized in that** the apparatus comprises closing means/adjustment means, such as valve means (107, 108, 113, 114, 130, 131, 132, 133, 134, 135), arranged in a circuit, which comprises at least a part of the transfer piping, with which means also the circulation of conveying air can be adjusted and/or controlled and/or opened or closed.

19. System according to any of claims 15 - 18, **characterized in that** at least one transfer pipe section (122; 204, 205, 206, 207, 208, 209) in which conveying air is not circulated can be connected to that part of the transfer piping in which conveying air is circulated such that at least during emptying of the input point of the transfer pipe section and conveyance of the material, the sum of the flow rate of the air flow acting in the transfer pipe section (122; 204, 205, 206, 207, 208, 209) and the flow rate of the blowing air flow of the circuit is fitted to correspond to the flow rate of the air flow of the suction side of the circuit at least at the point of connection of the pipe section (122) to the circuit, or in the proximity of it.

20. System according to any of claims 15 - 19, **characterized in that** the apparatus comprises at least one outlet (57a, 57b, 57c, 57d), which preferably comprises a closing means/adjustment means (58a, 58b, 58c, 58d), such as a valve means, for removing at least a part of the air from the circuit.

21. System according to any of claims 15 - 20, **characterized in that** the means for achieving a pressure difference comprise at least one pump device (50a, 50b, 50c, 50d), such as a partial-vacuum generator and/or a fan, the suction side of which is connected to a separating means (20a, 20b) or to a transfer pipe (100, 109, 110) leading to it via an air duct (101a, 101b).

22. System according to any of claims 15 - 21, **characterized in that** the means for achieving a pressure difference comprise at least one pump device (51 a, 51 b, 51 c, 51 d), such as a partial-vacuum generator and/or a fan, and means (55a, 56a; 55b, 56b; 55c, 56c; 55d, 56d; 111, 112, 113, 114) for connecting the blowing side of at least one pump device, such as a partial-vacuum generator and/or a fan, to blow into the circuit.

23. System according to any of claims 15 - 22, **characterized in that** the apparatus comprises means (107, 108, 111, 112, 113, 114) for connecting the conveying air circulation into the opposite direction in at least a part of the circuit, which part is formed from at least a part of a transfer pipe (100).

24. System according to any of claims 15 - 23, **characterized in that** the input points (60) of material are the input points of waste, such as waste receptacles or refuse chutes.

25. System according to any of claims 15 - 24, **characterized in that** at least one valve means (62) is between an input point (60) and a transfer pipe (100), by opening and closing which valve means the input of material and/or replacement air into the transfer pipe is adjusted.

26. System according to any of claims 15 - 25, **characterized in that** the apparatus comprises at least one air inlet (66), which preferably comprises a valve means (64), for bringing air into the circuit from outside it.

27. System according to any of claims 15 - 26, **characterized in that** the transfer pipe section (122; 204, 205, 206, 207, 208, 209) in which conveying air is not circulated is large in its length, in which case the length of the transfer pipe section is over 1000 meters, even a number of kilometers.

28. System according to any of claims 15 - 17, **characterized in that** pipes are used as the transfer piping (100), the diameter (d) of which is typically in the range 100-1000 mm, preferably 300 - 800 mm, most preferably 450 - 600 mm.

## Patentansprüche

1. Verfahren zum Fördern von Abfallmaterial in einem pneumatischen Abfalltransfersystem, wobei das Transfersystem aufweist: zumindest zwei Eingangsstellen (60) von Abfallmaterial, die mit einer Eingangsleitung (63) verbunden werden können, eine Materialtransferleitung (100), die mit jeder Eingangsleitung (63) verbunden ist, und zumindest eine Trenneinrichtung (20a, 20b), wobei das Material entlang der Transferleitung bis zu wenigstens einer Trenneinrichtung (20a, 20b) gefördert wird, in der das Material von der Förderluft getrennt wird, und Mittel zur Erzielung einer Druckdifferenz und/oder eines Förderluftstroms in der Transferleitung (100) zumindest während des Förderns von Material, wobei die Mittel zur Erzielung einer Druckdifferenz und/oder eines Förderluftstromes zumindest eine Pumpeneinheit aufweisen, die wenigstens eine Pumpeinrichtung (51a, 51b, 51c, 51d) aufweist, wobei die Transferleitung (100) zumindest einen Transferleitungsabschnitt aufweist, in dem Förderluft zirkuliert wird, **dadurch gekennzeichnet, dass** bei dem Verfahren zumindest ein Transferleitungsabschnitt (122; 204, 205, 206, 207, 208, 209), in dem die Förderluft nicht zirkuliert wird, wobei dieser Abschnitt mit dem Teil des Transferleitungssystems verbunden ist, in dem die Förderluft zirkuliert wird, zumindest während des Leerens einer Eingangsstelle des Transferleitungsabschnitts und während des Förderns von Material in dem Transferleitungsabschnitt (122; 204, 205, 206, 207, 208, 209) so dass der Förderweg des Materials in der Transferleitung teilweise von einem Transferleitungsabschnitt (122; 204, 205, 206, 207, 208, 209), in dem Förderluft nicht zirkuliert wird und zum Teil von einem Transferleitungsabschnitt, in dem Förderluft zirkuliert wird, gebildet ist, und dass der Transferleitungsabschnitt (122; 204, 205, 206, 207, 208, 209), in dem Förderluft nicht zirkuliert wird ausgebildet ist, so dass er einen kleineren Durchmesser hat als der Transferleitungsabschnitt, in dem Förderluft zirkuliert wird, und dass eine Länge des Transferleitungsabschnitts (122, 204, 205, 206, 207, 208, 209) in dem Förderluft nicht zirkuliert wird ausgebildet ist, größer als 100 Meter zu sein.

2. Verfahren nach Anspruch 1, **dadurch gekennzeichnet, dass** bei dem Verfahren die Druckseite und/oder die Saugseite von zumindest einer Pumpeinrichtung (51a, 51b, 51c, 51d) mit der Transferleitung (100) verbunden ist, von dem wenigstens ein Teil einen Kreis bildet, in dem Förderluft zirkuliert werden kann, und dass das Luftvolumen, das aus der Transferleitung (100) ausgeblasen wird im Wesentlichen dem Luftvolumen entspricht, das in die Transferleitung gelangt.

3. Verfahren nach Anspruch 1 oder 2, **dadurch gekennzeichnet, dass** bei dem Verfahren Förderluft in einem Kreis zirkuliert wird, der durch zumindest einen Teil der Transferleitung mit einer Pumpeinrichtung (50a, 50b, 50c) gebildet ist, wobei deren Saugseite mit wenigstens einer Trenneinrichtung (20a, 20b) und weiter mit einer Transferleitung (100) an seiner Rücklaufseite verbunden ist, so dass, falls notwendig, zumindest ein Teil der Förderluft an der Druckseite der Pumpeinrichtungen in den Kreis an der Abgabeseite der Transferleitung geleitet wird.

4. Verfahren nach einem der Ansprüche 1-3, **dadurch gekennzeichnet, dass** bei dem Verfahren Luft über wenigstens einen Luftauslass (57a, 57b, 57c, 57d), der vorzugsweise ein Schließmittel/Einstellmittel, wie etwa ein Ventilmittel (58a, 58b, 58c, 58d), aufweist, aus dem Kreis entfernt wird.

5. Verfahren nach einem der Ansprüche 1-4, **dadurch gekennzeichnet, dass** auch die Zirkulation von Luft in einem Kreis, der zumindest einen Teil der Transferleitung (100) aufweist, eingestellt und/oder gesteuert und/oder geöffnet oder geschlossen wird mit Schließmitteln/Einstellmitteln, wie etwa mit Ventilmitteln (107, 108, 113, 114, 130, 131, 132, 133, 134, 135), die in dem Kreis angeordnet sind.

6. Verfahren nach einem der Ansprüche 1-5, **dadurch gekennzeichnet, dass** bei dem Verfahren ein partielles Vakuum in dem Kreis mit zumindest einer Pumpeinrichtung (51a, 51b, 51c, 51d) erreicht ist, wie etwa einem Partial-Vakuum-Generator und/oder einem Gebläse, wobei dessen Saugseite mit einem Trennmittel (20a, 20b) oder mit einer Transferleitung (100, 109, 110) mittels eines dorthin führenden Luftkanals (101a, 101b) verbunden ist,.

7. Verfahren nach einem der Ansprüche 1-6, **dadurch gekennzeichnet, dass** bei dem Verfahren der Druck in dem Kreis mit wenigstens einer Pumpeinrichtung (51a, 51b, 51c, 51d) erreicht wird, wie etwa einem Partial-Vakuum-Generator und/oder einem Gebläse, wobei die Blasseite davon verbunden ist, um in den Kreis zu blasen.

8. Verfahren nach einem der Ansprüche 1-7, **dadurch gekennzeichnet, dass** bei dem Verfahren die Luftzirkulation durch Verbinden eingestellt wird, falls notwendig, in entgegengesetzte Richtung in zumindest einem Teil des Kreises, wobei der Teil aus wenigstens einem Teil einer Transferleitung (100) gebildet ist.

9. Verfahren nach einem der Ansprüche 1-8, **dadurch gekennzeichnet, dass** bei dem Verfahren Material aus den MaterialEingangsstellen (60) eingeführt wird, welches die Eingangsstellen von Abfall sind, wie etwa Abfallaufnahmen oder Abfallschächte.

10. Verfahren nach einem der Ansprüche 1-9, **dadurch gekennzeichnet, dass** bei dem Verfahren Austauschluft mittels wenigstens einem Austauschluftschacht, der vorzugsweise ein Ventilmittel enthält, in den Kreis gebracht wird, wobei in diesem Fall die in den Kreis eingebrachte Austauschluft im Wesentlichen mit dem Luftvolumen übereinstimmt, das aus dem Kreis ausgeblasen wird.

11. Verfahren nach einem der Ansprüche 1-10, **dadurch gekennzeichnet, dass** zumindest ein Ventilmittel (62) zwischen einer Eingangsstelle (60) von Material und einer Transferleitung (100) ist und durch Öffnen und Schließen des Ventilmittels die Zufuhr von Material und/oder Austauschluft in die Transferleitung eingestellt wird.

12. Verfahren nach einem der Ansprüche 1-11, **dadurch gekennzeichnet, dass** der Transferleitungsabschnitt (122, 204, 205, 206, 207, 208, 209), in dem keine Förderluft zirkuliert wird, in seiner Länge lang ausgebildet wird, wobei in diesem Fall die Länge des Transferleitungsabschnitts über 1000 Meter ist, sogar eine Anzahl von Kilometern.

13. Verfahren nach einem der Ansprüche 1-12, **dadurch gekennzeichnet, dass** Leitungen als Transferleitung (100) verwendet werden, wobei der Durchmesser davon typischerweise im Bereich von 100-1000 mm, vorzugsweise 300-800 mm, weiter vorzugsweise 450-600 mm ist.

14. Verfahren nach einem der Ansprüche 1-13, **dadurch gekennzeichnet, dass** die Summe der Strömungsrate der Luftströmung, die in dem Transferleitungsabschnitt (122; 204, 205, 206, 207, 208, 209) von zumindest einem Transferleitungsabschnitt (122; 204, 205, 206, 207, 208, 209) wirkt, in dem Förderluft nicht zirkuliert wird, wobei der Abschnitt zumindest während des Leerens von der Eingangsstelle des Transferleitungsabschnitts und während des Förderns von Material mit dem Teil der Transferleitung verbunden ist, in dem Förderluft zirkuliert wird, und der Strömungsrate der Blasluftströmung des Kreises der Strömungsrate der Luftströmung der Saugseite des Kreises entspricht, zumindest an der Verbindungsstelle des Leitungsabschnitts (122) mit dem Kreis oder in der Nähe davon.

15. Pneumatisches Abfalltransfersystem, das aufweist: zumindest zwei Eingangsstellen (60) von Material, genauer von Abfallmaterial, die mit einer Eingangsleitung (63) verbunden werden können, eine Materialtransferleitung (100), die mit jeder Eingangsleitung (63) verbunden ist und eine Trenneinrichtung (20a, 20b), in der das zu fördernde Material von der Förderluft getrennt wird, und Mittel (50a, 50b, 50c, 50d) zur Erzielung einer Druckdifferenz und/oder eines Förderluftstroms, wobei die Transferleitung (100) wenigstens einen Transferleitungsabschnitt aufweist, der zu einem Kreis gebildet werden kann, in dem Förderluft zirkuliert werden kann, **dadurch gekennzeichnet, dass** zumindest ein Transferleitungsabschnitt (122) vorhanden ist, in dem Förderluft nicht zirkuliert, wobei der Abschnitt mit dem Teil der Transferleitung verbunden werden kann, in dem Förderluft zirkuliert werden kann, zumindest während des Leerens einer Eingangsstelle (60) des Transferleitungsabschnitts und während des Förderns von Material in dem Transferleitungsabschnitt (122), so dass der Förderweg des Materials in der Transferleitung (100) ausgeführt ist, um zumindest teilweise von dem Transferleitungsabschnitt (122), in dem Förderluft nicht zirkuliert wird und teilweise von dem Transferleitungsabschnitt, in dem Förderluft zirkuliert wird, gebildet zu werden, und dass der Transferleitungsabschnitt (122) in dem Förderluft nicht zirkuliert wird, ausgeführt ist, um in seinem Durchmesser kleiner zu sein als der Transferleitungsabschnitt, in dem Förderluft zirkuliert wird, und dass eine Länge des Transferleitungsabschnitts (122, 204, 205, 206, 207, 208, 209), in dem Förderluft nicht zirkuliert wird, über 100 Meter ist.

16. System nach Anspruch 15, **dadurch gekennzeichnet, dass** die Vorrichtung außerdem Mittel zum Zirkulieren von Förderluft in einem Kreis aufweist, der zumindest von einem Teil der Transferleitung mit wenigstens einer Pumpeinrichtung (50a, 50b, 50c) gebildet ist, wobei die Saugseite davon mit zumindest einer Trenneinrichtung (20a, 20b) und weiter mit einer Transferleitung (100) auf ihrer Rücklaufseite verbunden werden kann, so dass, wenn notwendig, zumindest ein Teil der Förderluft an der Druckseite der Pumpeinrichtungen zu der Auslassseite der Transferleitung in den Kreis geleitet werden kann.

17. System nach Anspruch 15 oder 16, **dadurch gekennzeichnet, dass** das Luftvolumen, das aus dem Transferleitungssystem auszublasen ist, angepasst ist, um im Wesentlichen dem Luftvolumen zu entsprechen, das in das Transferleitungssystem gelangt.

18. System nach einem der Ansprüche 15-17, **dadurch gekennzeichnet, dass** die Vorrichtung Schließmittel/Einstellmittel, wie etwa Ventilmittel (107, 108, 113, 114, 130, 131, 132, 133, 134, 135), aufweist, die in einem Kreis eingeordnet sind, der zumindest einen Teil der Transferleitung aufweist, wobei mit diesen Mitteln auch die Zirkulation von Förderluft eingestellt und/oder gesteuert und/oder geöffnet oder geschlossen werden kann.

19. System nach einem der Ansprüche 15-18, **dadurch gekennzeichnet, dass** zumindest ein Transferleitungsabschnitt (122; 204, 205, 206, 207, 208, 209), in dem Förderluft nicht zirkuliert wird, mit dem Teil der Transferleitung verbunden werden kann, in dem Förderluft zirkuliert wird, so dass zumindest während des Leerens der Eingangsstelle des Transferleitungsabschnitts und der Förderung des Materials, die Summe der Strömungsrate der Luftströmung, die in dem Transferleitungsabschnitt (122; 204, 205, 206, 207, 208, 209) wirkt und der Strömungsrate der Blasluftströmung des Kreises angepasst ist, um mit der Strömungsrate der Luftströmung der Saugseite des Kreises übereinzustimmen, zumindest an der Verbindungsstelle des Leitungsabschnitts (122) mit dem Kreis oder in der Nähe davon.

20. System nach einem der Ansprüche 15-19, **dadurch gekennzeichnet, dass** die Vorrichtung zumindest einen Auslass (57a, 57b, 57c, 57d) aufweist, der vorzugsweise ein Schließmittel/Einstellmittel (58a, 58b, 58c, 58d), wie etwa ein Ventilmittel, aufweist, um zumindest einen Teil der Luft aus dem Kreis zu entfernen.

21. System nach einem der Ansprüche 15-20, **dadurch gekennzeichnet, dass** die Mittel zur Erzielung einer Druckdifferenz zumindest eine Pumpe (50a, 50b, 50c, 50d) aufweisen, wie etwa einen Partial-Vakuum-Generator und/oder ein Gebläse, wobei die Saugseite davon mit einem Trennmittel (20a, 20b) oder einer Transferleitung (100, 109, 110) mittels eines dahinführenden Luftkanals (101a, 101b) verbunden ist,.

22. System nach einem der Ansprüche 15-21, **dadurch gekennzeichnet, dass** die Mittel zur Erzielung einer Druckdifferenz zumindest eine Pumpeinrichtung (51a, 51b, 51c, 51d) aufweisen, wie etwa ein Partial-Vakuum-Generator und/oder ein Gebläse und Mittel (55a, 56a; 55b, 56b; 55c, 56c; 55d, 56d; 111, 112, 113, 114) zur Verbindung der Blasseite von zumindest einer Pumpeinrichtung, wie etwa einem Partial-Vakuum-Generator und/oder einem Gebläse, um in den Kreis zu blasen.

23. System nach einem der Ansprüche 15-22, **dadurch gekennzeichnet, dass** die Vorrichtung Mittel (107, 108, 111, 112, 113, 114) zur Verbindung der Förderluftzirkulation in entgegengesetzte Richtung in zumindest einem Teil des Kreises aufweist, dessen Teil zumindest von einem Teil einer Transferleitung (100) gebildet ist.

24. System nach irgendeinem der Ansprüche 15-23, **dadurch gekennzeichnet, dass** die Eingangsstellen (60) von Material die Eingangsstellen von Abfall sind, wie etwa Abfallaufnahmen oder Abfallschächte.

25. System nach einem der Ansprüche 15-24, **dadurch gekennzeichnet, dass** zumindest ein Ventilmittel (62) zwischen einer Eingangsstelle (60) und einer Transferleitung (100) ist, wobei durch Öffnen und Schließen des Ventilmittels die Zufuhr von Material und/oder Austauschluft in die Transferleitung eingestellt wird.

26. System nach einem der Ansprüche 15-25, **dadurch gekennzeichnet, dass** die Vorrichtung zumindest einen Lufteinlass (66) aufweist, der vorzugsweise ein Ventilmittel (64) aufweist, um Luft von außerhalb in den Kreis zu bringen.

27. System nach einem der Ansprüche 15-26, **dadurch gekennzeichnet, dass** der Transferleitungsabschnitt (122; 204, 205, 206, 207, 208, 209), in dem Förderluft nicht zirkuliert wird, eine lange Länge hat, wobei in diesem Fall die Länge des Transferleitungsabschnitts über 1000 Meter, sogar eine Anzahl von Kilometern ist.

28. System nach einem der Ansprüche 15-17, **dadurch gekennzeichnet, dass** Leitungen als Transferleitungssystem (100) verwendet werden, wobei der Durchmesser (d) davon typischerweise in dem Bereich von 100 bis 1000 mm, vorzugsweise 300-800 mm, weiter vorzugsweise 450-600 mm ist.

## Revendications

1. Procédé pour transporter des déchets dans un système de transfert de déchets pneumatique, lequel système de transfert comprend au moins deux points d'entrée (60) de déchets qui peuvent être raccordés à un tuyau d'entrée (63), un tuyau de transport de matière (100) qui est raccordé à chaque tuyau d'entrée (63), et au moins un dispositif de séparation (20a, 20b), la matière est transportée le long du tuyau de transfert vers le au moins un dispositif de séparation (20a, 20b) dans lequel la matière est séparée de l'air de transport, et un moyen pour obtenir une différence de pression et/ou un flux d'air de transport dans le tuyau de transfert (100) au moins pendant le transport de la matière, lequel moyen pour obtenir une différence de pression et/ou un flux d'air de transfert comprend au moins une unité de pompe qui comprend au moins un dispositif de pompe (51a, 51b, 51c, 51d),
la tuyauterie de transfert (100) comprenant au moins une section de tuyau de transfert dans laquelle l'air de transport est circulé, **caractérisé en ce que** dans le procédé , au moins une section de tuyau de transfert (122 ; 204, 205, 206, 207, 208, 209) dans laquelle l'air de transport n'est pas circulé, laquelle section est raccordée à cette partie de la tuyauterie de transfert dans laquelle l'air de transport est circulé, au moins pendant le vidage d'un point d'entrée de la section de tuyau de transfert et pendant le transport de la matière dans la section de tuyau de transfert (122 ; 204, 205, 206, 207, 208, 209), de sorte que la voie de transport de la matière dans la tuyauterie de transfert est formée partiellement à partir d'une section de tuyau de transfert (122 ; 204, 205, 206, 207, 208, 209) dans laquelle l'air de transport n'est pas circulé, et partiellement à partir d'une section de tuyau de transfert dans laquelle l'air de transport est circulé, et **en ce que** la section de tuyau de transfert (122 ; 204, 205, 206, 207, 208, 209) dans laquelle l'air de transport n'est pas circulé, est formée pour être inférieure du point de vue de son diamètre à la section de tuyau de transfert dans laquelle l'air de transport est circulé et **en ce qu'**une longueur de la section de tuyau de transfert (122, 204, 205, 206, 207, 208, 209) dans laquelle l'air de transport n'est pas circulé, est formée pour être supérieure à 100 mètres.

2. Procédé selon la revendication 1, **caractérisé en ce que** dans le procédé, le côté de pression et/ou le côté d'aspiration d'au moins un dispositif de pompe (51a, 51b, 51c, 51d) est raccordé à la tuyauterie de transfert (100), dont au moins une partie forme un circuit dans lequel l'air de transport peut être circulé, et **en ce qu'**un volume d'air à souffler hors de la tuyauterie de transfert (100) correspond essentiellement au volume d'air entrant dans la tuyauterie de transfert.

3. Procédé selon la revendication 1 ou 2, **caractérisé en ce que** dans le procédé, l'air de transport est circulé dans un circuit formé par au moins une partie de la tuyauterie de transfert avec un dispositif de pompe (50a, 50b, 50c), dont le côté d'aspiration est raccordé à au moins un dispositif de séparation (20a, 20b) et plus loin vers un tuyau de transfert (100), sur son côté de retour, de sorte que, si nécessaire, au moins une partie de l'air de transport du côté de pression des dispositifs de pompe est amenée dans le circuit du côté de la sortie du tuyau de transfert.

4. Procédé selon l'une quelconque des revendications 1 à 3, **caractérisé en ce que** dans le procédé, l'air est retiré du circuit via au moins une sortie d'air (57a, 57b, 57c, 57d), qui comprend de préférence un moyen de fermeture/moyen de réglage, tel qu'un moyen de valve (58a, 58b, 58c, 58d).

5. Procédé selon l'une quelconque des revendications 1 à 4, **caractérisé en ce qu'**également la circulation de l'air dans un circuit, qui comprend au moins une partie de la tuyauterie de transfert (100), est réglée et/ou contrôlée et/ou ouverte ou fermée avec le moyen de fermeture/moyen de réglage, comme avec des moyens de valve (107, 108, 113, 114, 130, 131, 132, 133, 134, 135) qui sont agencés dans un circuit.

6. Procédé selon l'une quelconque des revendications 1 à 5, **caractérisé en ce que** dans le procédé, on obtient un vide partiel dans le circuit avec au moins un dispositif de pompe (51a, 51b, 51c, 51d), tel qu'un générateur de vide partiel et/ou un ventilateur, dont le côté d'aspiration est raccordé à un moyen de séparation (20a, 20b) ou à un tuyau de transfert (100, 109, 110) menant à ce dernier via un conduit d'air (101a, 101b).

7. Procédé selon l'une quelconque des revendications 1 à 6, **caractérisé en ce que** dans le procédé, la pression est obtenue dans le circuit avec au moins un dispositif de pompe (51a, 51b, 51c, 51d), tel qu'un générateur de vide partiel et/ou ventilateur, dont le côté de soufflage est raccordé pour souffler dans le circuit.

8. Procédé selon l'une quelconque des revendications 1 à 7, **caractérisé en ce que** dans le procédé, la circulation d'air est réglée en la raccordant, si nécessaire, dans la direction opposée dans au moins une partie du circuit, laquelle partie est formée à partir d'au moins une partie d'un tuyau de transfert (100).

9. Procédé selon l'une quelconque des revendications 1 à 8, **caractérisé en ce que** dans le procédé, la matière est amenée à partir des points d'entrée (60) de matière, qui sont les points d'entrée de déchets, tels que des réceptacles de déchets ou des goulottes de déchets.

10. Procédé selon l'une quelconque des revendications 1 à 9, **caractérisé en ce que** dans le procédé, l'air de remplacement est amené dans le circuit via au moins un conduit d'air de remplacement, qui comprend de préférence un moyen de valve, auquel cas, l'air de remplacement amené dans le circuit correspond essentiellement au volume d'air soufflé hors du circuit.

11. Procédé selon l'une quelconque des revendications 1 à 10, **caractérisé en ce qu'**au moins un moyen de valve (62) est entre un point d'entrée (60) de matière et un tuyau de transfert (100), en ouvrant et en fermant ce moyen de valve, l'entrée de matière et/ou d'air de remplacement dans le tuyau de transfert est réglée.

12. Procédé selon l'une quelconque des revendications 1 à 11, **caractérisé en ce que** la section de tuyau de transfert (122, 204, 205, 206, 207, 208, 209) dans laquelle l'air de transport n'est pas circulé, est formée pour être grande du point de vue de sa longueur, auquel cas, la longueur de la section de tuyau de transfert est supérieure à 1000 mètres, même à un certain nombre de kilomètres.

13. Procédé selon l'une quelconque des revendications 1 à 12, **caractérisé en ce que** les tuyaux sont utilisés en tant que tuyauterie de transfert (100) dont le diamètre est typiquement dans la plage de 100 à 1000 mm, de préférence de 300 à 800 mm, de manière préférée entre toutes de 450 à 600 mm.

14. Procédé selon l'une quelconque des revendications 1 à 13, **caractérisé en ce que** la somme du débit de l'écoulement d'air agissant dans la section de tuyau de transfert (122 ; 204, 205, 206, 207, 208, 209) d'au moins une section de tuyau de transfert (122 ; 204, 205, 206, 207, 208, 209) dans laquelle l'air de transport n'est pas circulé, laquelle section est raccordée à cette partie de la tuyauterie de transfert dans laquelle l'air de transport est circulé, au moins pendant le vidage du point d'entrée de la section de tuyau de transfert et pendant le transport de matière, et le débit de l'écoulement d'air de soufflage du circuit correspond au débit de l'écoulement d'air du côté de l'aspiration du circuit, au moins au point de raccordement de la section de tuyau (122) au circuit, ou à proximité de ce dernier.

15. Système de transfert de déchets pneumatique qui comprend au moins deux points d'entrée (60) de matière, plus particulièrement des déchets qui peuvent être raccordés à un tuyau d'entrée (63), un tuyau de transfert de matière (100) qui est raccordé à chaque tuyau d'entrée (63), et un dispositif de séparation (20a, 20b) dans lequel la matière à transporter est séparée de l'air de transport, et un moyen (50a, 50b, 50c, 50d) pour obtenir une différence de pression et/ou un flux d'air de transport, la tuyauterie de transfert (100) comprenant au moins une section de tuyau de transfert qui peut être formée dans une circuit dans lequel l'air de transport peut être circulé, **caractérisé en ce qu'**il y a au moins une section de tuyau de transfert (122) dans laquelle l'air de transport n'est pas circulé, laquelle section peut être raccordée à cette partie de la tuyauterie de transfert dans laquelle l'air de transport peut être circulé, au moins pendant le vidage d'un point d'entrée (60) de la section de tuyau de transfert et pendant le transport de la matière dans la section de tuyau de transfert (122), de sorte que la voie de transport de la matière dans la tuyauterie de transfert (100) est prévue pour être formée partiellement à partir d'une section de tuyau de transfert (122) dans laquelle l'air de transport n'est pas circulé, et partiellement à partir d'une section de tuyau de transfert dans laquelle l'air de transport est circulé, et **en ce que** la section de tuyau de transfert (122) dans laquelle l'air de transport n'est pas circulé, est formée pour être plus petite, du point de vue de son diamètre, que la section de tuyau de transfert dans laquelle l'air de transport est circulé, et **en ce qu'**une longueur de la section de tuyau de transfert (122, 204, 205, 206, 207, 208, 209) dans laquelle l'air de transport n'est pas circulée, est supérieure à 100 mètres.

16. Système selon la revendication 15, **caractérisé en ce que** l'appareil comprend en outre un moyen pour faire circuler l'air de transport dans un circuit formé par au moins une partie de la tuyauterie de transfert avec au moins un dispositif de pompe (50a, 50b, 50c), dont le côté d'aspiration peut être raccordé à au moins un dispositif de séparation (20a, 20b) et plus loin vers un tuyau de transfert (100), sur son côté de retour, de sorte que, si nécessaire, au moins une partie de l'air de transport du côté de la pression des dispositifs de pompe peut être amenée vers le côté de sortie du tuyau de transfert dans le circuit.

17. Système selon la revendication 15 ou 16, **caractérisé en ce que** le volume d'air à souffler hors de la tuyauterie de transfert est prévu pour correspondre essentiellement au volume d'air venant dans la tuyauterie de transfert.

18. Système selon l'une quelconque des revendications 15 à 17, **caractérisé en ce que** l'appareil comprend un moyen de fermeture/moyen de réglage, tel qu'un moyen de valve (107, 108, 113, 114, 130, 131, 132, 133, 134, 135), agencé dans un circuit, qui comprend au moins une partie de la tuyauterie de transfert, avec lequel moyen également, la circulation de l'air de transport peut être ajustée et/ou contrôlée et/ou ouverte ou fermée.

19. Système selon l'une quelconque des revendications 15 à 18, **caractérisé en ce qu'**au moins une section de tuyau de transfert (122 ; 204, 205, 206, 207, 208, 209) dans laquelle l'air de transport n'est pas circulé, peut être raccordée à cette partie de la tuyauterie de transfert dans laquelle l'air de transport est circulé de sorte qu'au moins pendant le vidage du point d'entrée de la section de tuyau de transfert et le transport de la matière, la somme du débit de l'écoulement d'air agissant dans la section de tuyau de transfert (122 ; 204, 205, 206, 207, 208, 209) et le débit de l'écoulement d'air de soufflage du circuit est prévue pour correspondre au débit de l'écoulement d'air du côté d'aspiration du circuit au moins au point de raccordement de la section de tuyau (122) au circuit, ou à proximité de ce dernier.

20. Système selon l'une quelconque des revendications 15 à 19, **caractérisé en ce que** l'appareil comprend au moins une sortie (57a, 57b, 57c, 57d) qui comprend de préférence un moyen de fermeture/moyen de réglage (58a, 58b, 58c, 58d), tel qu'un moyen de valve, pour retirer au moins une partie de l'air du circuit.

21. Système selon l'une quelconque des revendications 15 à 20, **caractérisé en ce que** le moyen pour obtenir une différence de pression comprend au moins un dispositif de pompe (50a, 50b, 50c, 50d), tel qu'un générateur de vide partiel et/ou un ventilateur, dont le côté d'aspiration est raccordé à un moyen de séparation (20a, 20b) ou à un tuyau de transfert (100, 109, 110) menant à ce dernier via un conduit d'air (101a, 101b).

22. Système selon l'une quelconque des revendications 15 à 21, **caractérisé en ce que** le moyen pour obtenir une différence de pression comprend au moins un dispositif de pompe (51a, 51b, 51c, 51d), tel qu'un générateur de vide partiel et/ou un ventilateur, et un moyen (55a, 56a ; 55b, 56b ; 55c, 56c ; 55d, 56d ; 111, 112, 113, 114) pour raccorder le côté de soufflage d'au moins un dispositif de pompe, tel qu'un générateur de vide partiel et/ou ventilateur, pour souffler dans le circuit.

23. Système selon l'une quelconque des revendications 15 à 22, **caractérisé en ce que** l'appareil comprend un moyen (107, 108, 111, 112, 113, 114) pour raccorder le circuit d'air de transport dans la direction opposée dans au moins une partie du circuit, laquelle partie est formée à partir d'au moins une partie d'un tuyau de transfert (100).

24. Système selon l'une quelconque des revendications 15 à 23, **caractérisé en ce que** les points d'entrée (60) de matière sont les points d'entrée de déchets, tels que des réceptacles de déchets ou des goulottes de déchets.

25. Système selon l'une quelconque des revendications 15 à 24, **caractérisé en ce qu'**au moins un moyen de valve (62) est entre un point d'entrée (60) et un tuyau de transfert (100), en ouvrant et en fermant ce moyen de valve, l'entrée de matière et/ou d'air de remplacement dans le tuyau de transfert est réglée.

26. Système selon l'une quelconque des revendications 15 à 25, **caractérisé en ce que** l'appareil comprend au moins une entrée d'air (66) qui comprend de préférence un moyen de valve (64) pour amener l'air dans le circuit depuis l'extérieur de ce dernier.

27. Système selon l'une quelconque des revendications 15 à 26, **caractérisé en ce que** la section de tuyau de transfert (122 ; 204, 205, 206, 207, 208, 209) dans laquelle l'air de transport n'est pas circulé, est grande du point de vue de sa longueur, auquel cas la longueur de la section de tuyau de transfert est supérieure à 1000 mètres, même à un certain nombre de kilomètres.

28. Système selon l'une quelconque des revendications 15 à 17, **caractérisé en ce que** les tuyaux sont utilisés en tant que tuyauterie de transfert (100), dont le diamètre (d) est typiquement dans la plage de 100 à 1000 mm, de préférence de 300 à 800 mm, de manière préférée entre toutes de 450 à 600 mm.
